# EUROPEAN PATENT SPECIFICATION

(11) **EP 2 339 200 B1**
(45) Date of publication and mention of the grant of the patent: **06.09.2017**
(21) Application number: 11162248.6
(22) Date of filing: 10.07.2007
(51) Int. Cl.: F16D 69/02, C08K 3/34, C08L 21/00, C08K 9/04, C08K 7/14, C08L 61/06, C08L 63/00

(54) **Clutch facing and compounded rubber composition usable therefor**
Kupplungsbelag und dafür verwendbare verbundene Gummizusammensetzung
Garniture d'embrayage et composition de caoutchouc composé pour celle-ci

(30) Priority: 11.07.2006 JP 2006190189
(43) Date of publication of application: 29.06.2011
(62) Divisional of application: 07112171.9
(73) Proprietor: AISIN KAKO KABUSHIKI KAISHA, Toyota-shi Aichi-ken 470-0492 (JP)
(72) Inventor: Katsukawa, Masahiro, Komaki-shi Aichi 485-0068 (JP)
(74) Representative: TBK

(56) References cited:
- EP-A2- 1 878 936
- US-A- 4 743 634
- US-B1- 6 182 804

## Description

### FIELD OF THE INVENTION

This invention relates to a dry clutch facing, e.g. a clutch facing used in a clutch of a vehicle such as an automobile, and particularly relates to a clutch facing having an improved property of abrasion resistance, rotation fracture strength and judder resistance. The invention also relates to a compounded rubber composition that is usable as an ingredient of the clutch facing.

### BACKGROUND OF THE INVENTION

In a clutch used in a vehicle like an automobile, a clutch facing reaches very high temperature when it is used in a high-load region, e.g. when it is repeatedly operated in a half-clutch or half-engaged condition. Therefore, there are many cases where abrasion resistance or the like of the clutch facing becomes an issue or a concern. Particularly, in recent years, the clutch facing is required to have improved abrasion resistance in order to cope with a high power engine. Also, the clutch facing is required to have improved rotation fracture strength in order to cope with high rotation speed of an engine and improved judder resistance for improving drivability.

In view of the above challenges, the applicants have filed a patent application in Japan for an invention relating to a friction material including a clutch facing. The Japanese patent application was published under Laid Open Patent Publication No. H01-206128. The friction material according to the invention described in the Patent Publication No. H01-206128 has a resin molded friction material that is integrally formed from a substrate material, an inorganic additive, a binder, a friction adjuster and the like. A rubber coating is formed on a friction surface of the resin molded friction material. The rubber coating contains an inorganic filler having a Mohs hardness of seven or less. A calcium carbonate powder, a barium carbonate powder, a diatomite powder or a clay powder is used as the inorganic filler.

However, there is still a problem to be solved in the conventional inventions of the friction material including the invention of the clutch facing described in the Patent Publication No. H01-206128. Specifically, the rubber coating is formed on the surface of the friction material by coating a compounded rubber that is dissolved in toluene. Then, the rubber coating has a very small thickness such as 10µm to 100µm. Thus, in view of an abrasion allowance of the clutch facing being about 1.4mm, the rubber coating only has a limited effect of enlarging the initial friction coefficient just at a very initial stage. Moreover, with such structure, there is another problem that no effect is obtainable in the improvement of the rotation rapture strength and the judder resistance. Further, US 4,743,643 A discloses a molded non-asbestos friction member containing diatomaceous earth.

### BRIEF SUMMARY OF THE INVENTION

In view of the above problems, an object of the present invention is to provide a clutch facing that improves a high-temperature strength of a compounded rubber to a large degree by mixing a diatomaceous earth as an inorganic filler within a predetermined volume ratio into the compounded rubber of the clutch facing having the compounded rubber as the component material, thereby performing excellent abrasion resistance, rotation fracture strength and judder resistance.

Another object of the present invention is to provide a compounded rubber composition usable for a clutch facing that has significantly improved high-temperature strength by mixing therein a diatomaceous earth as an inorganic filler within a predetermined volume ratio, thereby enabling the clutch facing to perform excellent abrasion resistance, rotation fracture strength and judder resistance.

The present invention relates to a use according to claim 1.

Further beneficial developments are set forth in the dependent claims.

The "diatomaceous earth" or "diatomite" is a clay or a clod made of dead diatoms deposited and fossilizing on a seabed. The diatom is a single-celled phytoplankton that lived in the water of an ancient ocean.

In the clutch facing , the synthetic resin for impregnating the glass fibers may preferably be one of a phenolic resin, a modified phenolic resin and an epoxy resin.

In the clutch facing, the compounded rubber may preferably contain a rubber, a sulfur, a vulcanization accelerator, a thermosetting resin powder, a resin dust and the diatomaceous earth.

In the clutch facing , the diatomaceous earth may more preferably be mixed in the compounded rubber within a range of 3 vol% to 13 vol% to the total volume of the compounded rubber.

In the clutch facing , the diatomaceous earth may more preferably be mixed in the compounded rubber within a range of 8 vol% to 13 vol% to the total volume of the compounded rubber.

In the clutch facing, "compounded rubber" is a material constituting the clutch facing. The compounded rubber is a mixture of a rubber as a main component and other compounding ingredients. The "rubber" may be composed of an NBR rubber (acrylonitrile-butadiene rubber or latex), an SBR (styrene-butadiene rubber or latex), a natural rubber, a mixture thereof or the like. The "thermosetting resin powder" may preferably be composed of a phenolic resin powder, a modified phenolic resin powder, an epoxy powder, a mixture thereof or the like. The "resin dust" may preferably be composed of a melamine resin dust, a cashew resin dust, a mixture thereof or the like.

In conclusion, the inventors have reached the present invention through keen experiments and study about a suitable material as ingredients of the compounded rubber. Specifically, the inventors found out that the most excellent characteristics are obtainable when the compounded rubber contains a rubber component as a main ingredient including the NBR (acrylonitrile-butadiene rubber or latex), the SBR (styrene-butadiene rubber or latex), the natural rubber mixed with the sulfur as a vulcanizing agent, a vulcanization accelerator, a thermosetting resin powder, a resin dust and the diatomaceous earth within the predetermined volume ratio. The inventors have completed the invention on the basis of such findings and knowledge.

According to a second aspect of the invention, the compounded rubber uniformly contains a diatomaceous earth powder within a range of 3 vol% to 18 vol% to a total volume thereof.

According to a third aspect of the invention, the compounded rubber uniformly contains a diatomaceous earth powder within a range of 3 vol% to 13 vol% to a total volume thereof.

According to a fourth aspect of the invention, the compounded rubber contains a rubber, a sulfur, a vulcanization accelerator, a thermosetting resin powder, a resin dust and a diatomaceous earth powder within a range of 3 vol% to 18 vol% to a total volume thereof.

According to a fifth aspect of the invention, compounded rubber contains a rubber, a sulfur, a vulcanization accelerator, a thermosetting resin powder, a resin dust and a diatomaceous earth powder within a range of 3 vol% to 13 vol% to a total volume thereof.

Further objects and advantages of the invention will be apparent from the following description, reference being had to the accompanying drawings, wherein preferred embodiments of the invention are clearly shown.

### BRIEF DESCRIPTION OF THE SEVERAL VIEWS OF THE DRAWINGS

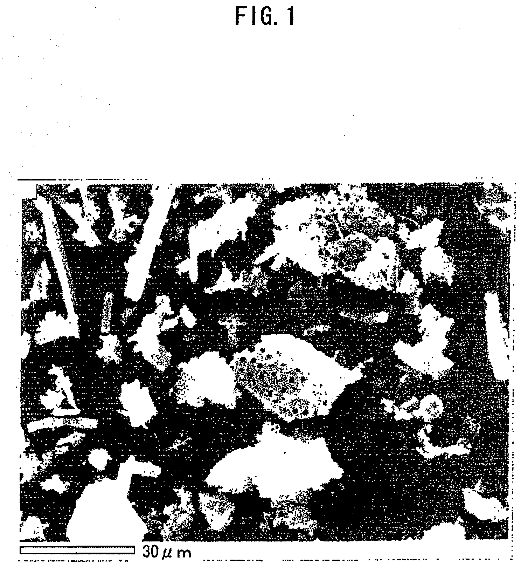

Fig. 1 is a scanning electron microscope (SEM) picture showing a structure of a diatomaceous earth used in a compounded rubber of a clutch facing according to one preferred embodiment of the invention.

### DETAILED DESCRIPTION OF THE INVENTION

A clutch facing according to a preferred embodiment of the invention is described hereunder referring to FIG. 1. Fig. 1 is a scanning electron microscope (SEM) picture showing a structure of a diatomaceous earth used in a compounded rubber of a clutch facing according to one preferred embodiment of the invention.

A clutch facing according to the one embodiment of the invention has a fixed shape like a ring plate as seen in conventional clutch facings, while being composed of glass fibers as a substrate impregnated with a thermosetting resin and coated with a compounded rubber. The thermosetting resin impregnated in the glass fibers may preferably be a phenol resin, a modified phenol resin, an epoxy resin or a mixture of two or more of the phenol resin, the modified phenol resin and the epoxy resin. Particularly, the phenol resin, the modified phenol resin and the epoxy resin are easily acquired and have excellent heat resistance. Thus, they are desirable as the synthetic resin for impregnating the glass fibers. Of course, other kind of thermosetting resin be impregnated in the glass fibers as the substrate material. The same effects will be obtained even if any kinds of thermosetting resins are used as the synthetic resin for impregnating the glass fibers. The compounded rubber essentially consists of a rubber, a vulcanizing agent such as a sulfur, a vulcanization accelerator, and a diatomaceous earth. The compounded rubber may contain one or more of a carbon black serving as a friction adjuster or the like, an inorganic filler such as a calcium carbonate. The rubber may preferably be an NBR rubber (acrylonitrile-butadiene rubber or acrylonitrile-butadiene latex), an SBR rubber (styrene-butadiene rubber or styrene-butadiene rubber latex), a natural rubber or a mixture of two or more of the NBR rubber, the SBR rubber and the natural rubber. Of course, other kind of rubber may be used as the rubber of the compounded rubber.

The compounded rubber may contain one or more of a carbon black serving as a friction adjuster or the like, an inorganic filler such as a calcium carbonate. The compounded rubber may also contain a thermosetting resin powder for reinforcement or the like. The thermosetting resin powder may preferably be a phenolic resin powder, a modified phenolic resin powder, an epoxy resin powder or a mixture of two or more of the phenolic resin powder, the modified phenolic resin powder and the epoxy resin powder. Of course, other kind of synthetic resin powder may be used as the resin powder of the compounded rubber. The compounded rubber may also contain a resin dust. The resin dust may preferably be a melamine resin dust, a cashew resin dust or a mixture thereof. Of course, other kind of resin dust may be used as the resin dust of the compounded rubber.

The "diatomaceous earth" or "diatomite" is a naturally produced soft and chalk-like sedimentary rock. The diatomaceous earth is easily crumbled into a fine white to off-white powder. The diatomaceous powder is very light due to its high porosity. The typical chemical composition of the diatomaceous earth is 86% silica, 5% sodium, 3% magnesium and 2% iron. The diatomaceous earth consists of fossilized remains of the diatoms, a type of hard-shelled algae. That is, a body of the diatom is covered with a hard shell made of a silicon dioxide (SiO2, silica) same as the silica of the glass. An infinite number of pores are opened on or in the shell of the diatom in a regular manner. A size of the pore is extremely small and minute or one several thousands of a pore of a charcoal that is used as a wall material in recent years. Therefore, the diatomaceous earth powder is excellent in moisture-absorption characteristics as well as adsorptive property of hazardous chemical substances or the like. In view of such features, the diatomaceous earth powder is frequently used as a building material, particularly as a wall material in these days.

The diatomaceous earth is mixed, normally in a form of the powder, in the compounded rubber within a fixed mixing ratio. The mixture ratio of the diatomaceous earth should be within a range of 3 vol% to 18 vol% in a total volume of the compounded rubber. If the diatomaceous earth having the aforementioned characteristics is mixed in the compounded rubber within such range, it improves very much a strength, particularly a high-temperature strength of the compounded rubber as a constituent material of the clutch facing. That is, the inventors made hard study and many experiments in order to find a critical range of the blending ratio of the diatomaceous earth in the compounded rubber. After a long and hard trial and error process, the inventors have finally reached the critical range of the mixing ratio or the range of 3 vol% to 18 vol%. Within such range of the mixing ratio, it was confirmed that highly improved characteristics were obtainable for the clutch facing. Thus, the inventors have made the present invention. If the mixing ratio of the diatomaceous earth is less than 3 vol% to the entire volume of the compounded rubber, there is scarcely obtained an effect of the diatomaceous earth to improve the strength of the compounded rubber. On the other hand, if the mixing ratio is more than 18 vol% to the entire volume of the compounded rubber, the viscosity of the compounded rubber becomes too high to enable kneading of the compounded rubber.

If the diatomaceous earth is blended within the above fixed range in the compounded rubber, the diatomaceous earth has a large contact area with the other ingredients or the rubber in the compounded rubber due to its infinite number of pores. Therefore, the diatomaceous earth has a significantly large reinforcing effect to an overall compounded rubber, thereby improving the abrasion resistance and the rotation break resistance very much. Moreover, it is thought that the judder phenomenon occurs when the clutch facing is under a repeated half-clutch condition and a rubber part of the clutch facing is softened by a friction heat, thereby generating vibration when the clutch facing bites a counter material just before the end of their engagement. If the diatomaceous earth is mixed in the compounded rubber, the rubber part is hard to be softened by the friction heat. Thereby, the biting action of the clutch facing to the counter material is lessened. Thus, the clutch facing has an improved judder resistance. Accordingly, the clutch facing of the present embodiment improves a high-temperature strength of a compounded rubber to a large degree by mixing a diatomaceous earth as an inorganic filler within a predetermined volume ratio into the compounded rubber of the clutch facing having the compounded rubber as the component material, thereby performing excellent abrasion resistance, rotation fracture strength and judder resistance.

In addition, the inventors found that the mixing ratio of the diatomaceous earth was more preferable within the range of 3 vol% to 13 vol%, too, in view of workability of the compounded rubber. Where the mixing ratio is in the range of 13 vol% to 18 vol%, the viscosity of the compounded rubber rises to such a degree as affects easy kneading of the compounded rubber. Therefore, in view of the workability, it is more desirable to set the mixing ratio within a range of 3 vol% to 13 vol%.

The clutch facing is manufactured by a following process composed of a resin impregnating step, a rubber coating step, a molding step, a grinding step or the like, for example. In the resin impregnating step, a glass fiber bundle gathering or bundling glass fibers as a substrate is impregnated with a liquid impregnant containing a thermosetting resin so as to form a resin impregnated strand. The fiber bundle is typically a glass roving or the like having glass fibers as base fibers. If the impregnating thermosetting resin is the one selected from the group consisted of the phenol resin, the modified phenol resin, the epoxy resin and the mixture of two or more of them, the manufacturing process is more facilitated due to their easy acquisition. Moreover, they are excellent in a heat resistance. Thus, they are desirable as the synthetic resin for impregnation of the glass fibers as the substrate of the clutch facing. Next, in the rubber coating step, the compounded rubber composition is coated on the resin impregnated strand.

Then, the resin impregnated strand is wound up in a spiral configuration thereby defining a first ring board-shaped body corresponding to a shape of the clutch facing. Next, the first ring board-shaped body is disposed in a metal mold and heat-pressed therein at a predetermined range of a pressure or about 9 to 16MPa and at a predetermined range of a temperature or about 150°C to 200 °C, for example. Thereby, the first ring board-shaped body is made into a second ring board-shaped body. Then, the second ring board-shaped body is processed with a heat treatment for a fixed period of time or about 4 to 5 hours in an atmosphere of a fixed temperature or at about 150 °C to 250 °C, for example. Thus, the thermosetting resin in the second ring board-shaped body is cured and thermosetted, so that the second ring board-shaped body is formed into a hardened ring board-shaped body having a form corresponding to the form of the clutch facing. Lastly, the hardened ring board-shaped body is taken out of the metal mold. Thereafter, front and rear surfaces of the hardened ring board-shaped body are ground to form the clutch facing as a final product.

Of course, in embodying the invention, the clutch facing can be manufactured by another process. Moreover, the resin impregnating step, the rubber coating step, the molding step or the grinding step may be carried out in another way or under another condition.

Measurement experimentations were conducted for confirming a relation between a mixing amount or mixing ratio (volume percent (vol%)) of the diatomaceous earth and a strength improving effect by the diatomaceous earth in the compounded rubber by itself, while the compounded rubber forming the clutch facing as one component or ingredient. The compounded rubber was prepared by mixing a rubber, a carbon black, a sulfur, a vulcanization accelerator, phenolic resin powders as thermosetting resin powders, a synthetic resin dust, a calcium carbonate as an inorganic filler and the diatomaceous earth. The rubber used therein was a mixture of an NBR rubber (acrylonitrile-butadiene rubber), an SBR rubber (styrene-butadiene rubber) and a natural rubber. The synthetic resin dust was a mixture of a melamine resin dust and a cashew resin dust. Then, four kinds of compounded rubbers were prepared as a first example to a fourth example of the present embodiment. The mixing ratio (vol%) of the diatomaceous earth was gradually increased from the first example to the fourth example.

Specifically, a mixing amount or a mixing ratio of each of the components or ingredients of the compounded rubber was kept constant in each of the first to the fourth examples, except the calcium carbonate and the diatomaceous earth. That is, the fixed amount of the rubber was set at 32 vol%. The fixed amount of the carbon black was set at 5 vol%. The fixed amount of the sulfur was set at 3 vol%. The fixed amount of the vulcanization accelerator was set at 2 vol%. The fixed amount of the phenolic resin powder was set at 20 vol%. The fixed amount of the synthetic resin dust was set at 20 vol%. On the other hand, a total amount of the calcium carbonate and the diatomaceous earth was set at 18 vol% so that a sum total of all the components became 100vol%. In the first example to the fourth example, the amount of the diatomaceous earth was increased step by step so as to be 3vol%, 8vol%, 13vol% and 18vol%, respectively. Accordingly, the amount of the calcium carbonate was decreased step by step so as to be 15vol%, 10vol%, 5vol% and 0vol%, respectively.

Moreover, a compounded rubber was prepared as a comparative example. The compounded rubber as the comparative example consists of the same components and the same amounts as those of the first to the fourth examples, except the calcium carbonate and the diatomaceous earth. That is, the compounded rubber as the comparative example contains no diatomaceous earth at all, while mixing the calcium carbonate at a ratio of 18 vol% accordingly. Each of the compositions of the compounded rubbers according to the first to the fourth examples and the compounded rubber according to the comparative example are shown in upper to lower columns of TABLE 1.

**TABLE 1**

| | | 1st Ex. | 2nd Ex. | 3rd Ex. | 4th Ex. | Com. Ex. |
|---|---|---|---|---|---|---|
| Component Of Compound Rubber (vol%) | rubber | 32 | 32 | 32 | 32 | 32 |
| | carbon black | 5 | 5 | 5 | 5 | 5 |
| | sulfur | 3 | 3 | 3 | 3 | 3 |
| | vulcanization accelerator | 2 | 2 | 2 | 2 | 2 |
| | phenol resin powders | 20 | 20 | 20 | 20 | 20 |
| | resin dust | 20 | 20 | 20 | 20 | 20 |
| | calcium carbonate | 15 | 10 | 5 | 0 | 18 |
| | diatomaceous earth | 3 | 8 | 13 | 18 | 0 |
| Tensile Strength (MPa) | | 8.9 | 9.4 | 9.5 | 9.6 | 6.7 |

Then, each of the first to the fourth examples of the compounded rubbers and the comparative example of the compounded rubber shown in TABLE 1 was compressed or plunged into a cavity of a metal mold. In the metal mold, each of the compounded rubbers was heat-pressed at a surface pressure of 15MPa and a temperature of 165 °C for 2 minutes and 30 seconds in a molding step. Degasification was conducted for several times in the molding step. Thus, five kinds of molded bodies of a fixed shape was obtained for the first to the fourth examples and the comparative example. Next, each of the molded bodies was thermally processed at a temperature of 200°C for 5 hours. Thereafter, front and rear surfaces of each of the thermally-processed molded bodies were ground. Then, test pieces were cut out of the ground molded bodies for a tensile test, respectively, into a dumbbell shape as five kinds of specimens of the first to the fourth examples and the comparative example. A high-temperature tensile strength test was conducted on each of the test pieces by use of a tensile tester (autograph) at a tensile speed of 5 mm/min. The tensile test was conducted in an atmosphere at a temperature of 200°C. The results of the tensile test were shown in a lowermost column of TABLE 1.

As shown in TABLE 1, high-temperature tensile strengths of the compounded rubbers according to the first to the fourth examples are improved drastically in comparison with that of the compounded rubber according to the comparative example. That is, the tensile strength was 8.9 MPa in the first example, 9.4 MPa in the second example, 9.5 MPa in the third example and 9.6 MPa in the fourth example. In contrast, the tensile strength was only 6.7 MPa in the comparative example. Thus, it was found that the high-temperature strength was improved by mixing the diatomaceous earth in the compounded rubber. Still, though not shown in TABLE 1, the strength is scarcely improved if the mixing ratio of the diatomaceous earth is less than 3 vol% or the ratio of the first example. On the other hand, even if the mixing ratio is increased more than 18 vol% or the ratio of the fourth example, the strength improvement effect is not bettered. To the contrary, there took place a problem that a viscosity of the compound rubber rose seriously thereby making kneading of the compounded rubber difficult. Accordingly, it was found that the mixing ratio of the diatomaceous earth should be within a range of 3 vol% to 18 vol% for a total volume of the compounded rubber.

As mentioned above, the high temperature strength of the clutch facing is improved very much by mixing the diatomaceous earth in the compounded rubber. This fact could be construed because the diatomaceous earth or its power has a complicated shape, as shown Fig. 1, with an infinite number of minute or fine pores opened thereon. Thus, the contact area of the diatomaceous earth to the rubber is very large, thereby enabling a high reinforcing effect to the overall compounded rubber.

Next, clutch facings as test pieces were manufactured for practical purposes by use of the compounded rubbers according to the first to the fourth examples and the comparative example. Then, their performance was evaluated. Specifically, glass fibers as a substrate material were impregnated with a phenol resin as a synthetic resin for impregnating the glass fibers. Then, the resin impregnated glass fibers were coated with each of the compounded rubbers according to the first to the fourth examples and the comparative example. Thereafter, the rubber coated glass fibers were rolled up into a predetermined size and set or plunged into a metal mold. In the metal mold, the rubber coated glass fibers were pressed and heated at a surface pressure of 15MPa and a temperature of 165°C, while being degasified several times. Such heat press molding was conducted for a time period of 2 minutes and 30 seconds. An obtained molded body was thermally processed or treated at a temperature of 200°C for 5 hours. Then, opposite surfaces (front and rear surfaces) of the thermally treated molded body were ground, respectively. A volume ratio of the glass fibers, the phenol resin and the compounded rubber was set at 2 to 1 to 7 in each of the test pieces of the clutch facings according to the first to the fourth examples and the comparative example.

A size of the clutch facing was set at an external diameter of Φ 236 mm, an inner diameter of Φ 150 mm and a thickness of 3.5 mm. A friction and wear test was conducted on each of the test pieces. The friction and wear test was conducted under a condition of an inertia of 3.9 kgm², a rotating speed of 1500rpm, a temperature (pressure plate temperature) of 300°C and a engaging number of 2000 times. Moreover, a spin burst test was conducted on each of the test pieces. The spin burst test was conducted under a condition of a temperature (ambient temperature) of 200°C. At this time, a rotating speed was increased in incremental steps by 200rpm/s from an initial speed of 3000rpm until the test piece clutch facing was broken. TABLE 2 collectively shows test results of the clutch facings using the compounded rubbers of the first to the fourth examples and the comparative example, respectively.

**TABLE 2**

| | | 1st Ex. | 2nd Ex. | 3rd Ex. | 4th Ex. | Com. Ex. |
|---|---|---|---|---|---|---|
| Friction/Wear Test | Minimum µ *1 | 0.29 | 0.28 | 0.28 | 0.28 | 0.30 |
| | Stable µ *2 | 0.35 | 0.34 | 0.34 | 0.33 | 0.35 |
| | Wear amount (mm) | 0.115 | 0.102 | 0.098 | 0.095 | 0.158 |
| Spin Burst Test *3 | | 12550 | 12600 | 12610 | 12620 | 11650 |
| Judder (m/s2) *4 | | 0.90 | 0.85 | 0.80 | 0.78 | 1.80 |

| | | | | | | |
|---|---|---|---|---|---|---|
| *1: Minimum friction coefficient at a time of tenth or more engagement among 2000 times of engagement *2: Average value of friction coefficient at a time of 200th or more engagement among 2000 times of engagement *3: Average value often test pieces *4: Vibration generated at the time of starting with a half-clutch condition that is measured by an acceleration meter | | | | | | |

As shown in TABLE 2, the clutch facing according to the first to the fourth examples have superior characteristics in comparison with the clutch facing according to the comparative example. That is, in the friction and wear test, it was confirmed that, though there are no significant difference in the minimum friction coefficient µ and the stable friction coefficient µ, the wear amount of the first example is clearly lessened in comparison with the comparative example. Moreover, the wear amount is more lessened in the second to the fourth examples, respectively. Thereby, it is found that the abrasion resistance is improved in the clutch facing using the compounded rubber mixed with the diatomaceous earth within the range of 3 vol% to 18 vol% to the overall volume of the compounded rubber.

Moreover, in the spin burst test, the clutch facings according to the first to the fourth examples clearly exhibit a higher rotation speed than the clutch facing according to the comparative example when they are broken, respectively. This means that the rotation breaking resistance or strength is significantly improved in the first to the fourth examples, respectively. Furthermore, with respect to the judder property, the vibration generated in the clutch facing according to the first example is restrained under a half value in comparison with the clutch facing according to the comparative example. The vibration is more lessened in the second to the fourth examples, respectively. Thereby, it is found that the rotation breaking resistance and the judder resistance are respectively improved in the clutch facing using the compounded rubber mixed with the diatomaceous earth within the range of 3 vol% to 18 vol% to the overall volume of the compounded rubber.

Consequently, it was confirmed that the clutch facing according to the present embodiment of the invention improved the high-temperature strength of the compounded rubber to a large degree by mixing the diatomaceous earth as the inorganic filler within the range of 3 vol% to 18 vol% into the compounded rubber of the clutch facing having the compounded rubber as the component material, thereby performing excellent abrasion resistance, rotation fracture strength and judder resistance.

In the first to the fourth examples of the present embodiment, the phenol resin is used as the synthetic resin for impregnating the glass fibers. However, the clutch facing may use other thermosetting resin in the form of powder or other thermosetting resin in the form other than the powder, including the modified phenol resin and the epoxy resin. Particularly, the phenol rein, the modified phenol resin and the epoxy resin are easily obtainable and excellent in the heat resistance. Therefore, they are suitable for the synthetic resin for impregnating the glass fibers as the raw material of the clutch facing.

The invention is not limited to the present embodiment or the first to the fourth examples in compositions, components, blending amounts, materials, sizes, fabricating methods or the like of the other parts of the clutch facing.

## Claims

1. A use of compounded rubber composition for producing a clutch facing by coating the compounded rubber composition on glass fibers impregnated with a synthetic resin, **characterized in that** the composition contains a diatomaceous earth powder within a range of 3 vol% to 18 vol% to a total volume thereof as an amount to improve a high-temperature strength of the compounded rubber composition.

2. The use of the compounded rubber composition according to claim 1, **characterized in that** the composition uniformly contains the diatomaceous earth powder.

3. The use of the compounded rubber composition according to claim 1 or 2, **characterized in that** the composition contains the diatomaceous earth powder within a range of 3 vol% to 13 vol% to a total volume thereof.

4. The use of the compounded rubber composition according to claim 1 or 2, **characterized in that** the composition contains the diatomaceous earth powder within a range of 8 vol% to 18 vol% to a total volume thereof.

5. The use of the compounded rubber composition according to claim 1 or 2, **characterized in that** the composition contains the diatomaceous earth powder within a range of 8 vol% to 13 vol% to a total volume thereof.

6. The use of the compounded rubber composition according to any of claims 1 to 5, **characterized in that** the composition contains a rubber, a sulfur, a vulcanization accelerator, a thermosetting resin powder, a resin dust and the diatomaceous earth powder.

7. The use of the compounded rubber composition according to any of claims 1 to 6, **characterized in that** the composition consists of
a rubber, a vulcanizing agent, a vulcanization accelerator and the diatomaceous earth powder as essential components, and
a thermosetting resin powder, a resin dust, a friction adjuster and/or an inorganic filler as optional components.

8. The use of the compounded rubber composition according to claim 7, wherein the inorganic filler is calcium carbonate and/or the vulcanizing agent is a sulfur.

9. The use of the compounded rubber composition according to claim 7 or 8, wherein the friction adjuster is carbon black.

## Patentansprüche

1. Verwendung einer kompoundierten Kautschukzusammensetzung zum Herstellen eines Kupplungsbelags durch Beschichten der kompoundierten Kautschukzusammensetzung auf Glasfasern, die mit synthetischem Harz imprägniert sind, **dadurch gekennzeichnet, dass** die Zusammensetzung ein Diatomeenpulver in einem Bereich von 3 Vol.-% bis 18 Vol.-% zu einem Gesamtvolumen davon als eine Menge zum Verbessern einer Hochtemperaturfestigkeit der kompoundierten Kautschukzusammensetzung enthält.

2. Verwendung der kompoundierten Kautschukzusammensetzung nach Anspruch 1, **dadurch gekennzeichnet, dass** die Zusammensetzung das Diatomeenpulver gleichförmig enthält.

3. Verwendung der kompoundierten Kautschukzusammensetzung nach Anspruch 1 oder 2, **dadurch gekennzeichnet, dass** die Zusammensetzung das Diatomeenpulver in einem Bereich von 3 Vol.-% bis 13 Vol.-% zu einem Gesamtvolumen davon enthält.

4. Verwendung der kompoundierten Kautschukzusammensetzung nach Anspruch 1 oder 2, **dadurch gekennzeichnet, dass** die Zusammensetzung das Diatomeenpulver in einem Bereich von 8 Vol.-% bis 18 Vol.-% zu einem Gesamtvolumen davon enthält.

5. Verwendung der kompoundierten Kautschukzusammensetzung nach Anspruch 1 oder 2, **dadurch gekennzeichnet, dass** die Zusammensetzung das Diatomeenpulver in einem Bereich von 8 Vol.-% bis 13 Vol.-% zu einem Gesamtvolumen davon enthält.

6. Verwendung der kompoundierten Kautschukzusammensetzung nach einem der Ansprüche 1 bis 5, **dadurch gekennzeichnet, dass** die Zusammensetzung ein Kautschuk, einen Schwefel, einen Vulkanisationsbeschleuniger, ein wärmehärtendes Harzpulver, Harzstaub und das Diatomeenpulver enthält.

7. Verwendung der kompoundierten Kautschukzusammensetzung nach einem der Ansprüche 1 bis 6, **dadurch gekennzeichnet, dass** die Zusammensetzung besteht aus
einem Kautschuk, einem Vulkanisierungsmittel, einem Vulkanisationsbeschleuniger und dem Diatomeenpulver als essenzielle Bestandteile, und
einem wärmehärtenden Harzpulver, einem Harzstaub, einem Reibungseinstellungsmittel und/oder einem anorganischen Füllstoff als optionale Bestandteile.

8. Verwendung der kompoundierten Kautschukzusammensetzung nach Anspruch 7, wobei der anorganische Füllstoff Kalziumkarbonat ist und/oder das Vulkanisierungsmittel ein Schwefel ist.

9. Verwendung der kompoundierten Kautschukzusammensetzung nach Anspruch 7 oder 8, wobei das Reibungseinstellungsmittel Kohleschwarz ist.

## Revendications

1. Utilisation d'une composition à base de caoutchouc pour la production d'une garniture d'embrayage par revêtement de la composition à base de caoutchouc sur des fibres de verre imprégnées avec une résine synthétique, **caractérisée en ce que** la composition contient une poudre de terre de diatomée comprise dans la plage allant de 3 % en volume à 18 % en volume par rapport à un volume total de celle-ci en tant que quantité permettant d'améliorer la résistance à température élevée de la composition à base de caoutchouc.

2. Utilisation de la composition à base de caoutchouc selon la revendication 1, **caractérisée en ce que** la composition contient uniformément la poudre de terre de diatomée.

3. Utilisation de la composition à base de caoutchouc selon la revendication 1 ou 2, **caractérisée en ce que** la composition contient la poudre de terre de diatomée dans une plage allant de 3 % en volume à 13 % en volume par rapport au volume total de celle-ci.

4. Utilisation de la composition à base de caoutchouc selon la revendication 1 ou 2, **caractérisée en ce que** la composition contient la poudre de terre de diatomée dans une plage allant de 8 % en volume à 18 % en volume par rapport au volume total de celle-ci.

5. Utilisation de la composition à base de caoutchouc selon la revendication 1 ou 2, **caractérisée en ce que** la composition contient la poudre de terre de diatomée dans une plage allant de 8 % en volume à 13 % en volume par rapport au volume total de celle-ci.

6. Utilisation de la composition à base de caoutchouc selon l'une quelconque des revendications 1 à 5, **caractérisée en ce que** la composition contient un caoutchouc, du soufre, un accélérateur de vulcanisation, une poudre de résine thermodurcissable, une poussière de résine et la poudre de terre de diatomée.

7. Utilisation de la composition à base de caoutchouc selon l'une quelconque des revendications 1 à 6, **caractérisée en ce que** la composition se compose de
un caoutchouc, un agent de vulcanisation, un accélérateur de vulcanisation et la poudre de terre de diatomée en tant que composants essentiels, et
une poudre de résine thermodurcissable, une poussière de résine, un agent d'ajustement de friction et/ou une charge inorganique en tant que composants facultatifs.

8. Utilisation de la composition à base de caoutchouc selon la revendication 7, dans laquelle la charge inorganique est le carbonate de calcium et/ou l'agent de vulcanisation est le soufre.

9. Utilisation de la composition à base de caoutchouc selon la revendication 7 ou 8, dans laquelle l'agent d'ajustement de friction est le noir de carbone.
